# FASCICULE DE BREVET EUROPEEN

(11) **EP 2 868 361 B1**
(45) Date de publication et mention de la délivrance du brevet: **23.11.2016**
(21) Numéro de dépôt: 14178305.0
(22) Date de dépôt: 24.07.2014
(51) Int. Cl.: B01D 35/12, B01D 37/04, B01D 29/52

(54) **Système et procédé de commutation de l'écoulement d'un fluide dans un circuit de fluide, et circuit de fluide équipé dudit système**
System und Verfahren zum Umschalten der Flussrichtung eines Fluids in einem Fluidkreislauf, und mit diesem System ausgestatteter Fluidkreislauf
System and method for switching the flow of a fluid in a fluid circuit, and fluid circuit provided with said system

(30) Priorité: 26.07.2013 FR 1357434
(43) Date de publication de la demande: 06.05.2015
(73) Titulaire: Fluidexpert, 71530 Fragnes (FR)
(72) Inventeur: Novello, Pascal, 69100 VILLEURBANNE (FR); Pillon, Cédric, 71370 L'ABERGEMENT SAINT COLOMBE (FR)
(74) Mandataire: Cabinet Chaillot

(56) Documents cités:
- US-A- 4 615 800

## Description

La présente invention concerne le domaine des circuits de fluide, et en particulier des circuits de fluide ayant deux éléments de traitement montés en parallèle.

La présente invention porte en particulier sur un système pour la commutation sélective de l'écoulement d'un fluide dans un circuit de fluide ayant deux éléments de traitement du fluide montés en parallèle, ainsi que sur ledit circuit de fluide et sur un procédé de commutation de l'écoulement dans un tel circuit de fluide équipé dudit système de commutation d'écoulement de fluide.

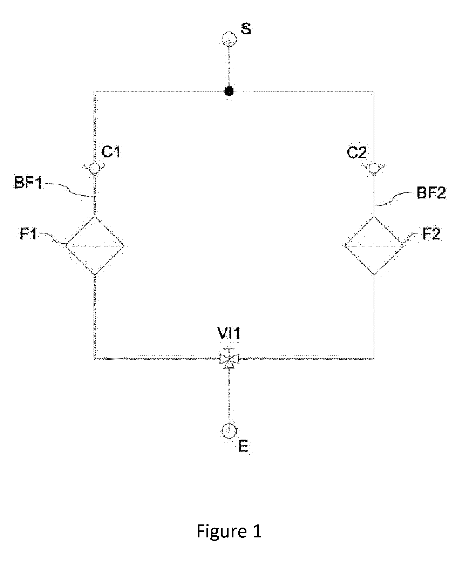

Dans certaines applications dans lesquelles un débit constant de fluide dans une installation comprenant un ou plusieurs circuits de fluide et un traitement du fluide en permanence sont nécessaires pour le fonctionnement de l'installation, l'installation comprend généralement un circuit de fluide à deux éléments de traitement montés en parallèle, comme représenté schématiquement sur la Figure 1.

Le document US 4 615 800 décrit un système de commutation de l'écoulement d'un fluide dans un circuit comprenant deux éléments de filtration, montés en parallèle.

Le traitement que subi le fluide peut, par exemple, être un traitement de dépollution et/ou de filtration, auquel cas le circuit de fluide à deux éléments de traitement forme un système de dépollution/filtration du fluide.

Prévoir deux éléments de traitement en parallèle vise à éviter un arrêt de l'installation lors d'un colmatage d'un élément de traitement ou lorsque la périodicité de maintenance de l'un des éléments de traitement est atteinte, en faisant passer l'écoulement du fluide par l'élément de traitement qui est opérationnel.

Si l'on se réfère à la Figure 1, on peut voir qu'un tel circuit de fluide comprend ainsi deux branches de filtration BF1, BF2 parallèles et reliées à une entrée de fluide principale E et à une sortie de fluide principale S.

Du fluide entre dans le circuit de fluide par l'entrée de fluide principale E et en sort par la sortie de fluide principale S, après avoir été traité.

Chaque branche de filtration BF1, BF2 comporte un filtre respectivement F1 et F2 servant d'élément de traitement du fluide.

Les filtres F1 et F2 sont utilisés de manière alternée. En d'autres termes, lorsque le filtre F1 est utilisé, c'est-à-dire que l'on amène du fluide à s'écouler à travers le filtre F1, le filtre F2 n'est pas utilisé, c'est-à-dire qu'aucun fluide ne passe à travers le filtre F2, et inversement.

Par conséquent, dans un tel circuit de fluide, il est nécessaire de prévoir des moyens pour diriger de manière sélective le fluide vers la première ou la seconde branche de filtration BF1, BF2, de telle sorte que, lorsque l'un des filtres F1, F2 doit être soumis à des opérations d'entretien ou de nettoyage, en particulier lors d'un colmatage du filtre F1, F2, il puisse être théoriquement isolé du reste du circuit de fluide, et le fluide détourné vers l'autre branche de filtration BF1, BF2.

A l'heure actuelle, on utilise généralement une vanne trois voies VT1 comme moyens pour diriger le fluide vers l'une ou l'autre des deux branches de filtration BF1, BF2, et on dispose un clapet anti-retour C1, C2 en sortie de chaque filtre F1, F2 pour empêcher un écoulement de fluide de la sortie vers l'entrée de chaque filtre F1, F2.

Lorsqu'il est nécessaire de commuter l'écoulement de l'une des branches de filtration BF1, BF2 vers l'autre branche BF2, BF1, un opérateur vient manoeuvrer la vanne trois voies VT1 pour amener le fluide à s'écouler vers la branche BF2, BF1. Après commutation, l'opérateur peut, par exemple, nettoyer le filtre F1 ou le remplacer par un nouveau filtre, l'isolement de la branche de filtration BF1 étant normalement assuré par la vanne trois voies VT1.

La Société déposante a découvert que l'on peut rencontrer une chute de pression lors de la commutation de l'écoulement d'une branche vers une autre, et que cette chute de pression est due au principe même de l'utilisation d'une vanne trois voies.

En effet, l'opérateur doit manoeuvrer la vanne trois voies très délicatement afin de rechercher l'équilibre entre les deux branches de filtration BF1, BF2, puis la placer dans la position dans laquelle l'écoulement est dirigé vers l'autre branche de filtration.

Cette chute de pression peut représenter un véritable problème lorsque le ou les équipements en sortie du circuit de fluide imposent une pression constante du fluide pour un fonctionnement optimal.

Par ailleurs, le circuit de fluide comporte généralement un pressostat différentiel mesurant l'éventuel différentiel de pression entre l'entrée de fluide principale E et la sortie de fluide principale S du circuit de fluide, de façon à pouvoir interrompre l'écoulement de fluide et arrêter l'installation en cas de défaillance du circuit de fluide dans lequel le fluide est traité.

Cependant, le pressostat différentiel interprète cette chute de pression comme un défaut, provoquant généralement un arrêt de l'installation alors que le circuit de fluide est encore opérationnel et que le fluide est traité.

En plus d'être délicate, la manoeuvre de la vanne trois voies VT1 est parfois rendue impossible du fait de l'usure ou qu'elle se grippe au niveau du boisseau. Dans un tel cas, il est nécessaire d'arrêter l'installation.

On constate donc que les moyens pour diriger l'écoulement de fluide vers l'une ou l'autre des branches de filtration BF1, BF2, ne permettent pas, au mieux un fonctionnement optimal de l'installation, au pire d'éviter l'arrêt de l'installation dans laquelle le circuit de fluide est monté et pour laquelle un écoulement continu de fluide et à pression sensiblement constante est cependant nécessaire.

Il existe donc un besoin pour une solution pour commuter l'écoulement d'un fluide dans un circuit de fluide comprenant deux éléments de traitement du fluide, montés en parallèle, en permettant un passage d'une branche de filtration à l'autre sans variation de débit et chute de pression dans le circuit de fluide.

La présente invention vise à satisfaire ce besoin et a pour objet un système de commutation de l'écoulement d'un fluide dans un circuit de fluide comprenant deux éléments de traitement du fluide, montés en parallèle entre une entrée de fluide principale et une sortie de fluide principale, le système de commutation servant à commuter l'écoulement vers l'un ou l'autre des éléments de traitement, avec isolement de l'élément de traitement dans lequel le fluide ne s'écoule pas, dit élément de traitement inactif, vis-à-vis de l'autre élément de traitement, dit actif, caractérisé par le fait que le système comprend une vanne d'isolement d'entrée à deux voies montée à l'entrée de chaque élément de traitement, et deux branches d'équipression ayant chacune une entrée de fluide en communication de fluide avec l'entrée de fluide principale, en amont desdites vannes d'isolement d'entrée, et une sortie de fluide en communication de fluide avec l'entrée d'un élément de traitement respectif, la sortie de fluide de chaque branche d'équipression étant en aval de la vanne d'isolement d'entrée respective, une vanne d'équipression à deux voies étant montée sur chaque branche d'équipression de façon à autoriser ou interdire l'écoulement de fluide suivant un trajet allant de l'entrée de fluide principale à l'élément de traitement respectif en passant par la branche d'équipression correspondante.

Le fait que les branches d'équipression soient en communication de fluide avec l'entrée de fluide principale du circuit de fluide en étant en amont des vannes d'isolement d'entrée permet de mettre en pression l'élément de traitement inactif avant l'isolement de l'élément de traitement actif, évitant ainsi une chute de pression.

De préférence, le système comprend en outre une vanne d'isolement de sortie à deux voies à la sortie de chaque élément de traitement, ce qui permet de garantir un isolement total de l'élément de traitement respectif en vue de son nettoyage, remplacement, etc.

Chaque élément de traitement peut être équipé d'une vanne de vidange montée en point bas de celui-ci, de façon à permettre la vidange de l'élément de traitement respectif.

Chaque élément de traitement peut en outre être équipé d'une vanne de purge montée en point haut de celui-ci, de façon à permettre la purge de l'élément de traitement respectif.

Avantageusement, le système comprend en outre des moyens de détection de la pression dans les éléments de traitement.

Dans un mode de réalisation préféré, le système comprend en outre des moyens de détection de différentiel de pression entre l'entrée de fluide principale et la sortie de fluide principale, les moyens de détection de différentiel de pression comprenant notamment un pressostat différentiel et un manomètre montés en parallèle et reliés à l'entrée de fluide principale et la sortie de fluide principale par des moyens de prise de pression, deux vannes d'isolement étant prévues, une à l'entrée et l'autre à la sortie du montage parallèle du pressostat différentiel et du manomètre.

De préférence, les vannes d'isolement, les vannes d'équipression, et le cas échéant les vannes de purge et les vannes de vidange, sont des vannes à boisseaux sphériques à deux voies.

Les vannes à boisseaux sphériques permettent d'assurer un isolement parfait du circuit qui est ouvert.

L'aire de section transversale des branches d'équipression peut être égale à une valeur représentant 1 à 10 % de celle de l'aire de section transversale de l'entrée de fluide principale.

Ceci permet d'éviter toute diminution du débit dans la branche de filtration active, même pour un temps faible.

La présente invention a également pour objet un circuit de fluide comprenant deux éléments de traitement du fluide, montés en parallèle entre une entrée de fluide principale et une sortie de fluide principale, et équipé d'un système de commutation de l'écoulement du fluide vers l'un ou l'autre des éléments de traitement, avec isolement de l'élément de traitement dans lequel le fluide ne s'écoule pas, dit élément de traitement inactif, vis-à-vis de l'autre élément de traitement, dit actif, caractérisé par le fait que le système de commutation est tel que défini ci-dessus.

Les éléments de traitement peuvent être des filtres, le circuit de fluide formant un système de dépollution/filtration de fluide.

De manière avantageuse, le circuit de fluide comprend un corps formé par un bloc dans lequel ont été forés des canaux formant tout ou partie du circuit dans lequel s'écoule le fluide, les vannes d'isolement d'entrée et le cas échéant de sortie, et les vannes d'équipression étant montées sur ledit corps.

Le mode de montage sur un corps en bloc foré permet une conception compacte, une diminution du nombre de raccords et une diminution des risques de fuite. De plus, le temps de montage se trouve diminué par comparaison à un tuyautage.

La présente invention a également pour objet un procédé de commutation de l'écoulement d'un fluide dans un circuit de fluide tel que défini ci-dessus, équipé d'un système de commutation tel que défini ci-dessus, des vannes de purge et de vidange étant prévues, vers un second élément de traitement dans lequel le fluide ne s'écoule pas, dit élément de traitement inactif, seules les vannes d'isolement d'entrée et de sortie pour un premier élément de traitement, dit actif et dans lequel s'écoule du fluide, étant ouvertes, la vanne d'équipression, dite première vanne d'équipression, montée sur la branche d'équipression dont la sortie est en communication de fluide avec l'entrée du premier élément de traitement étant également ouverte, caractérisé par le fait qu'il comprend les étapes consistant à, dans l'ordre suivant :
- ouvrir l'autre vanne d'équipression, montée sur la branche d'équipression dont la sortie est en communication de fluide avec l'entrée du second élément de traitement, pour le remplissage du second élément de traitement ;
- ouvrir la vanne de purge du second élément de traitement jusqu'à écoulement continu de fluide à partir de celle-ci, puis fermer la vanne de purge ;
- ouvrir la vanne d'isolement montée à l'entrée du second élément de traitement ;
- ouvrir la vanne d'isolement montée à la sortie du second élément de traitement ;
- fermer la vanne d'isolement montée à la sortie du premier élément de traitement ;
- fermer la vanne d'isolement montée à l'entrée du premier élément de traitement ; et
- fermer la première vanne d'équipression.

Ces différentes étapes sont, du fait de l'utilisation de vannes à deux voies, aisées à mettre en oeuvre et ne nécessitent pas de manoeuvre délicate et lente des vannes.

Pour mieux illustrer l'objet de la présente invention, on va en décrire ci-après, à titre indicatif et non limitatif, un mode de réalisation particulier avec référence au dessin annexé.

### Sur ce dessin :

- la Figure 1 est un schéma hydraulique d'un circuit de fluide formant un système de dépollution/filtration de fluide et équipé d'un système de commutation d'écoulement de fluide selon l'état antérieur de la technique ; et
- la Figure 2 est un schéma hydraulique d'un circuit de fluide formant un système de dépollution/filtration de fluide et équipé d'un système de commutation d'écoulement de fluide selon un mode de réalisation particulier de la présente invention.

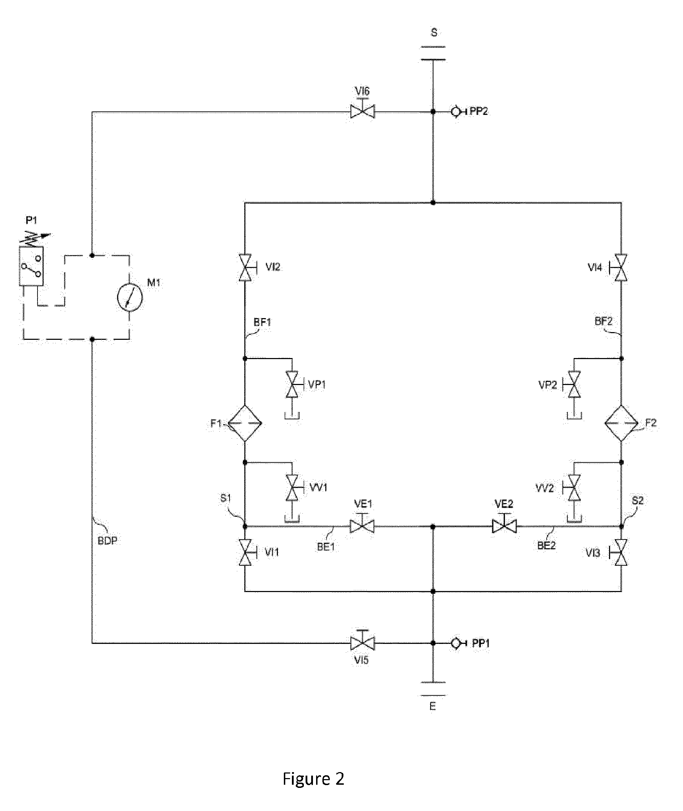

Si l'on se réfère à la Figure 2, on peut voir que l'on y a représenté un circuit de fluide à deux filtres, destiné à former un système de dépollution/filtration d'un fluide circulant dans une installation, après que le circuit de fluide a été monté sur l'installation, le circuit de fluide à deux filtres étant équipé d'un système de commutation d'écoulement de fluide selon un mode de réalisation particulier de la présente invention.

Le circuit de fluide à deux filtres comprend, comme dans le circuit de l'état antérieur de la technique représenté sur la Figure 1, une entrée de fluide principale E, une sortie de fluide principale S, une première branche de filtration BF1 et une seconde branche de filtration BF2 montées en parallèle entre l'entrée de fluide principale E et la sortie de fluide principale S, et les première et seconde branches de filtration BF1, BF2 comprennent respectivement un premier filtre F1 et un second filtre F2.

Le système de commutation d'écoulement de fluide selon le mode de réalisation particulier comprend deux vannes d'isolement d'entrée VI1, VI3, deux vannes d'isolement de sortie VI2, VI4, deux branches d'équipression BE1, BE2 et deux vannes d'équipression VE1, VE2.

Les vannes d'isolement d'entrée VI1, VI3 sont des vannes à deux voies montées en série sur la branche de filtration respectivement BF1, BF2, entre l'entrée de fluide principale E et l'entrée du filtre F1, F2 respectif.

Les vannes d'isolement de sortie VI2, VI4 sont des vannes à deux voies montées en série sur la branche de filtration respectivement BF1, BF2, entre la sortie du filtre F1, F2 respectif et la sortie de fluide principale S.

Les branches d'équipression BE1, BE2 ont une entrée en communication de fluide avec l'entrée de fluide principale E et ont chacune une sortie respectivement S1, S2 en communication de fluide avec la branche de filtration respectivement BF1, BF2.

En particulier, la sortie S1, S2 de chaque branche d'équipression BE1, BE2 est en aval, dans le sens d'écoulement du fluide, de la vanne d'isolement correspondante d'entrée VI1, VI3, et en amont du filtre F1, F2 respectif. En d'autres termes, chaque branche d'équipression BE1, BE2 se raccorde à la branche de filtration BF1, BF2 entre la vanne d'isolement d'entrée VI1, VI3 et le filtre F1, F2. Chaque branche d'équipression BE1, BE2 peut ainsi être considérée comme étant parallèle à la partie du circuit de fluide reliant l'entrée de fluide principale E et la vanne d'isolement d'entrée VI1, VI3 respective.

Les vannes d'équipression VE1, VE2 sont des vannes à deux voies et sont montées sur les branches d'équipression respectivement BE1, BE2, de façon à être apte à laisser passer ou interrompre l'écoulement de fluide allant de l'entrée de fluide principale E vers la sortie respectivement S1, S2 de la branche d'équipression BE1, BE2.

En outre, des première et seconde vannes de purge VP1, VP2 sont montées en point haut des filtres F1, F2 pour permettre la purge de ceux-ci lorsque cela est nécessaire.

Des première et secondes vannes de vidange VV1, VV2 sont montées en point bas des filtres F1, F2 pour permettre la vidange de ceux-ci lorsque cela est nécessaire.

Enfin, une branche de détection de différentiel de pression BDP relie l'entrée de fluide principale E et la sortie de fluide principale S, en parallèle des deux branches de filtration BF1, BF2.

La branche de détection de différentiel de pression BDP comprend, montés en série suivant le sens d'écoulement du fluide, une vanne d'isolement à deux voies VI5, des moyens de détection de différentiel de pression et une vanne d'isolement à deux voies VI6.

Les moyens de détection de différentiel de pression comprennent un pressostat différentiel P1 et un manomètre M1 montés en parallèle, et deux prises de pression PP1, PP2 respectivement sur l'entrée de fluide principale E et la sortie de fluide principale S.

Toutes les vannes VI1, VI2, VI3, VI4, VI5, VI6, VE1, VE2, VV1, VV2, VP1, VP2 sont des vannes à deux voies à boisseaux sphériques.

On va maintenant décrire la manière dont l'écoulement de fluide peut être commuté d'un écoulement à travers la branche de filtration BF1 à un écoulement à travers la branche de filtration BF2 avec isolement complet et sûr du filtre F1 et sans chute de pression.

Lorsque le filtre F1 est le filtre actif, les premières vannes d'isolement d'entrée VI1 et de sortie VI2 et la première vanne d'équipression VE1 sont ouvertes, et les secondes vannes d'isolement d'entrée VI3 et de sortie VI4, la seconde vanne d'équipression VE2 et les vannes de purge VP1, VP2 et de vidange VV1, VV2 sont fermées, de telle sorte que le fluide s'écoule à plein débit dans la première branche de filtration BF1 et à travers le filtre F1, où il est traité, avant de sortir du circuit de fluide par la sortie de fluide principale S, et le fluide ne s'écoule pas dans la seconde branche de filtration BF2.

Pour commuter l'écoulement de fluide vers la seconde branche de filtration BF2, on ouvre tout d'abord la seconde vanne d'équipression VE2 pour remplir le filtre F2 et établir l'équipression entre le filtre F2 et l'entrée de fluide principale E.

On souligne ici que l'aire de section transversale des branches d'équipression BE1, BE2 est suffisamment faible pour ne pas abaisser le débit dans la première branche de filtration BF1.

On ouvre ensuite la seconde vanne de purge VP2 pour la purge du filtre F2, et on la ferme dès présence de fluide de façon continue.

Après fermeture de la seconde vanne de purge VP2, on ouvre la seconde vanne d'isolement d'entrée VI3 et la seconde vanne d'isolement de sortie VI4, de sorte que le fluide peut s'écouler de l'entrée de fluide principale E à la sortie de fluide principale S en passant par la seconde branche de filtration BF2 et le filtre F2.

On constate donc que le fluide est amené à s'écouler à travers la seconde branche de filtration BF2 après que le filtre F2 a été mis à équipression avec la première branche de filtration BF1, de sorte qu'aucune chute de pression ne se produit.

On ferme les premières vannes d'isolement de sortie VI2 et d'entrée VI1 l'une après l'autre. Enfin, on ferme la première vanne d'équipression VE1, le filtre F1 étant alors isolé du fluide et pouvant être vidangé par ouverture de la première vanne de vidange VV1.

Etant donné que l'on utilise des vannes à deux voies pour isoler le filtre F1, l'isolement est sûr et complet, de telle sorte que l'opérateur peut remplacer le premier filtre F1 en toute sécurité.

Pour commuter l'écoulement de fluide de la seconde branche de filtration BF2 à la première branche de filtration BF1, on procède de manière analogue à celle décrite ci-dessus.

Le système de commutation selon la présente invention, ainsi que son procédé de fonctionnement, permettent donc une commutation de l'écoulement de fluide entre deux branches parallèles d'un circuit de fluide, avec isolement franc et sûr de la branche non utilisée, sans chute de pression et de débit.

La présente invention permet donc un écoulement continu de fluide, à plein débit, dans l'installation équipée du circuit de fluide selon la présente invention, et permet donc d'avoir un fonctionnement optimal de l'installation et d'éviter tout arrêt de cette dernière.

Il est bien entendu que le mode de réalisation particulier ci-dessus de la présente invention a été donné à titre indicatif et non limitatif et que des modifications pourront y être apportées sans que l'on s'écarte pour autant du cadre de la présente invention.

## Revendications

1. Système de commutation de l'écoulement d'un fluide dans un circuit de fluide comprenant deux éléments de traitement du fluide (F1, F2), montés en parallèle entre une entrée de fluide principale (E) et une sortie de fluide principale (S), le système de commutation servant à commuter l'écoulement vers l'un ou l'autre des éléments de traitement (F1, F2), avec isolement de l'élément de traitement (F1, F2) dans lequel le fluide ne s'écoule pas, dit élément de traitement inactif, vis-à-vis de l'autre élément de traitement (F1, F2), dit actif, **caractérisé par le fait que** le système comprend une vanne d'isolement d'entrée à deux voies (VI1, VI3) montée à l'entrée de chaque élément de traitement (F1, F2), et deux branches d'équipression (BE1, BE2) ayant chacune une entrée de fluide en communication de fluide avec l'entrée de fluide principale (E), en amont desdites vannes d'isolement d'entrée (VI1, VI3), et une sortie de fluide (SI, S2) en communication de fluide avec l'entrée d'un élément de traitement (F1, F2) respectif, la sortie de fluide (SI, S2) de chaque branche d'équipression (BE1, BE2) étant en aval de la vanne d'isolement d'entrée (VI1, VI3) respective, une vanne d'équipression à deux voies (VE1, VE2) étant montée sur chaque branche d'équipression (BE1, BE2) de façon à autoriser ou interdire l'écoulement de fluide suivant un trajet allant de l'entrée de fluide principale (E) à l'élément de traitement (F1, F2) respectif en passant par la branche d'équipression (BE1, BE2) correspondante.

2. Système selon la revendication 1, **caractérisé par le fait qu'**il comprend en outre une vanne d'isolement de sortie à deux voies (VI2, VI4) à la sortie de chaque élément de traitement (F1, F2).

3. Système selon l'une des revendications 1 et 2, **caractérisé par le fait que** chaque élément de traitement (F1, F2) est équipé d'une vanne de vidange (VV1, VV2) montée en point bas de celui-ci, de façon à permettre la vidange de l'élément de traitement (F1, F2) respectif.

4. Système selon l'une des revendications 1 à 3, **caractérisé par le fait que** chaque élément de traitement (F1, F2) est en outre équipé d'une vanne de purge (VP1, VP2) montée en point haut de celui-ci, de façon à permettre la purge de l'élément de traitement respectif.

5. Système selon l'une des revendications 1 à 4, **caractérisé par le fait qu'**il comprend en outre des moyens de détection de la pression dans les éléments de traitement (F1, F2).

6. Système selon l'une des revendications 1 à 5, **caractérisé par le fait qu'**il comprend en outre des moyens de détection de différentiel de pression entre l'entrée de fluide principale (E) et la sortie de fluide principale (S), les moyens de détection de différentiel de pression comprenant notamment un pressostat différentiel (P1) et un manomètre (M1) montés en parallèle et reliés à l'entrée de fluide principale (E) et la sortie de fluide principale (S) par des moyens de prise de pression (PP1, PP2), deux vannes d'isolement (VI5, VI6) étant prévues, une à l'entrée et l'autre à la sortie du montage parallèle du pressostat différentiel (P1) et du manomètre (M1).

7. Système selon l'une des revendications 1 à 6, **caractérisé par le fait que** les vannes d'isolement (VI1, VI2, VI3, VI4, VI5, VI6), les vannes d'équipression (VE1, VE2), et le cas échéant les vannes de purge (VP1, VP2) et les vannes de vidange (VV1, VV2), sont des vannes à boisseaux sphériques à deux voies.

8. Système selon l'une des revendications 1 à 7, **caractérisé par le fait que** l'aire de section transversale des branches d'équipression est égale à une valeur représentant 1 à 10 % de celle de l'aire de section transversale de l'entrée de fluide principale (E).

9. Circuit de fluide comprenant deux éléments de traitement du fluide (F1, F2), montés en parallèle entre une entrée de fluide principale (E) et une sortie de fluide principale (S), et équipé d'un système de commutation de l'écoulement du fluide vers l'un ou l'autre des éléments de traitement, avec isolement de l'élément de traitement dans lequel le fluide ne s'écoule pas, dit élément de traitement inactif, vis-à-vis de l'autre élément de traitement, dit actif, **caractérisé par le fait que** le système de commutation est tel que défini à l'une des revendications 1 à 8.

10. Circuit de fluide selon la revendication 9, **caractérisé par le fait que** les éléments de traitement (F1, F2) sont des filtres, le circuit de fluide formant un système de dépollution/filtration de fluide.

11. Circuit de fluide selon l'une des revendications 9 et 10, **caractérisé par le fait qu'**il comprend un corps formé par un bloc dans lequel ont été forés des canaux formant tout ou partie du circuit dans lequel s'écoule le fluide, les vannes d'isolement d'entrée (VI1, VI3) et le cas échéant de sortie (VI2, VI4), et les vannes d'équipression (VE1, VE2) étant montées sur ledit corps.

12. Procédé de commutation de l'écoulement d'un fluide dans un circuit de fluide tel que défini à l'une des revendications 9 et 10, équipé d'un système de commutation tel que défini à la revendication 4 ou à l'une des revendications 5 à 8 prises en dépendance de la revendication 4, vers un second élément de traitement (F2) dans lequel le fluide ne s'écoule pas, dit élément de traitement inactif, seules les vannes d'isolement d'entrée (VI1) et de sortie (VI2) pour un premier élément de traitement (F1), dit actif et dans lequel s'écoule du fluide, étant ouvertes, la vanne d'équipression (VE1), dite première vanne d'équipression, montée sur la branche d'équipression (BE1) dont la sortie est en communication de fluide avec l'entrée du premier élément de traitement (F1) étant également ouverte, **caractérisé par le fait qu'**il comprend les étapes consistant à, dans l'ordre suivant :
- ouvrir la vanne d'équipression (VE2) montée sur la branche d'équipression (BE2) dont la sortie (S2) est en communication de fluide avec l'entrée du second élément de traitement (F2), pour le remplissage du second élément de traitement (F2) ;
- ouvrir la vanne de purge (VP2) du second élément de traitement (F2) jusqu'à écoulement continu de fluide à partir de celle-ci, puis fermer la vanne de purge (VP2) ;
- ouvrir la vanne d'isolement (VI3) montée à l'entrée du second élément de traitement (F2) ;
- ouvrir la vanne d'isolement (VI4) montée à la sortie du second élément de traitement (F2) ;
- fermer la vanne d'isolement (VI2) montée à la sortie du premier élément de traitement (F1) ;
- fermer la vanne d'isolement (VI1) montée à l'entrée du premier élément de traitement (F1) ; et
- fermer la première vanne d'équipression (VE1).

## Patentansprüche

1. System zum Umschalten der Flussrichtung eines Fluids in einem Fluidkreislauf mit zwei Behandlungselementen für das Fluid (F1, F2), parallel montiert zwischen einem Haupt-Fluideingang (E) und einem Haupt-Fluidausgang (S), wobei das Umschaltsystem dazu dient, die Flussrichtung zu dem einen oder dem anderen der Behandlungselemente (F1, F2) umzuschalten, mit Absperrung des Behandlungselements (F1, F2) in dem das Fluid nicht strömt, genannt inaktives Behandlungselement, gegenüber dem anderen Behandlungselement (F1, F2), aktiv genannt, **gekennzeichnet dadurch, dass** das System ein Zweiweg-Eingangs-Absperrventil (VI1, VI3) umfasst, das an den Eingang jedes Behandlungselements (F1, F2) montiert ist, und zwei Gleichdruckzweige (BE1, BE2), von denen jeder einen Fluideingang aufweist, der in Fluidverbindung mit dem Haupt-Fluideingang (E) steht, den Eingangs-Absperrventilen (VI1, VI3) vorgeschaltet, und einen Fluidausgang (S1 S2) in Fluidverbindung mit dem Eingang je eines Behandlungselements (F1, F2), wobei der Fluidausgang (S1, S2) jedes Gleichdruckzweigs (BE1, BE2) dem jeweiligen Eingangs-Absperrventil (VI1, VI3) nachgeschaltet ist und ein Zweiweg-Gleichdruckventil (VE1, VE2) auf jeden Gleichdruckzweig (BE1, BE2) montiert ist, um den Fluidabfluss zu gestatten oder zu verbieten, entlang einer Strecke vom Haupt-Fluideingang (E) bis zum jeweiligen Behandlungselement (F1, F2), durch den entsprechenden Gleichdruckzweig (BE1, BE2) hindurch.

2. System nach Anspruch 1, **gekennzeichnet dadurch, dass** es außerdem ein Zweiweg-AusgangsAbsperrventil (VI2, VI4) am Ausgang jedes Behandlungselements (F1, F2) umfasst.

3. System nach einem der Ansprüche 1 und 2, **gekennzeichnet dadurch, dass** jedes Behandlungselement (F1, F2) mit einem Ablassventil (VV1, VV2) ausgestattet ist, das an einer tiefen Stelle davon montiert ist, um die Leerung des jeweiligen Behandlungselements (F1, F2) zu gestatten.

4. System nach einem der Ansprüche 1 bis 3, **gekennzeichnet dadurch, dass** jedes Behandlungselement (F1, F2) außerdem mit einem Reinigungsventil (VP1, VP2) ausgestattet ist, das an einer hohen Stelle von diesem montiert ist, um die Reinigung des jeweiligen Behandlungselements zu gestatten.

5. System nach einem der Ansprüche 1 bis 4, **gekennzeichnet dadurch, dass** es außerdem Mittel zur Ermittlung des Drucks in den Behandlungselementen (F1, F2) umfasst.

6. System nach einem der Ansprüche 1 bis 5, **gekennzeichnet dadurch, dass** es außerdem Mittel zur Ermittlung des Druckunterschieds zwischen dem Haupt-Fluideingang (E) und dem Haupt-Fluidausgang (S) umfasst, wobei die Mittel zur Ermittlung des Druckunterschieds vor allem einen Differenzdruckwächter (P1) und ein Manometer (M1) umfassen, die parallel montiert und mit dem Haupt-Fluideingang (E) und dem Haupt-Fluidausgang (S) durch Druckerfassungsmittel (PP1, PP2) verbunden sind, wobei zwei Absperrventile (VI5, VI6) vorgesehen sind, eines am Eingang und das andere am Ausgang der parallelen Montage des Differenzdruckwächters (P1) und des Manometers (M1).

7. System nach einem der Ansprüche 1 bis 6, **gekennzeichnet dadurch, dass** die Absperrventile (VI1, VI2, VI3, VI4, VI5, VI6), die Gleichdruckventile (VE1, VE2) und gegebenenfalls die Reinigungsventile (VP1, VP2) und die Ablassventile (VV1, VV2) Zweiwegkugelventile sind.

8. System nach einem der Ansprüche 1 bis 7, **gekennzeichnet dadurch, dass** der Bereich des Querschnitts der Gleichdruckzweige gleich einem Wert von 1 bis 10 % des Bereichs des Querschnitts des Haupt-Fluideingangs (E) ist.

9. Fluidkreislauf mit zwei Behandlungselementen für das Fluid (F1, F2), parallel montierte zwischen einem Haupt-Fluideingang (E) und einem Haupt-Fluidausgang (S), und mit einem System zum Umschalten der Flussrichtung des Fluids zu dem einen oder dem anderen Behandlungselement, mit Absperrung des Behandlungselements, in das das Fluid nicht strömt, genannt inaktives Behandlungselement, gegenüber dem anderen Behandlungselement, aktiv genannt, **gekennzeichnet dadurch, dass** das Umschaltsystem so ist, wie in einem der Patentansprüche 1 bis 8 definiert.

10. Fluidkreislauf nach Anspruch 9, **gekennzeichnet dadurch, dass** die Behandlungselemente (F1, F2) Filter sind, wobei der Fluidkreislauf ein Fluid-Reinigungs-/Filtersystem bildet.

11. Fluidkreislauf nach einem der Ansprüche 9 und 10, **gekennzeichnet dadurch, dass** er einen durch einen Block gebildeten Körper umfasst, in den Kanäle gebohrt sind, die den gesamten Kreislauf oder einen Teil davon bilden, in dem das Fluid strömt, wobei die Eingangsabsperrventile (VI1, VI3) und gegebenenfalls auch die Ausgangsabsperrventile (VI2, VI4) und die Gleichdruckventile (VE1, VE2) auf besagten Körper montiert sind.

12. Verfahren zum Umschalten der Flussrichtung eines Fluids in einem Fluidkreislauf wie definiert in einem der Ansprüche 9 und 10, mit einem Umschaltsystem wie definiert unter Anspruch 4 oder einem der Ansprüche 5 bis 8 in Abhängigkeit von Anspruch 4, zu einem zweiten Behandlungselement (F2) hin, in dem das Fluid nicht strömt, genannt inaktives Behandlungselement, wobei nur das Eingangs- (VI1) und das Ausgangsabsperrventil (VI2) für ein erstes Behandlungselement (F1), aktiv genannt und in dem das Fluid strömt, geöffnet sind, und wobei das Gleichdruckventil (VE21), genannt erstes Gleichdruckventil, das auf den Gleichdruckzweig (BE1) montiert ist, dessen Ausgang in Fluidverbindung mit dem Eingang des ersten Behandlungselements (F1) steht, ebenfalls geöffnet ist, **gekennzeichnet dadurch, dass** es folgende Phasen umfasst, in der folgenden Reihenfolge:
- das Gleichdruckventil (VE2) öffnen, das auf den Gleichdruckzweig (BE2) montiert ist, dessen Ausgang (S2) in Fluidverbindung mit dem Eingang des zweiten Behandlungselements (F2) steht, zum Füllen des zweiten Behandlungselements (F2);
- das Reinigungsventil (VP2) des zweiten Behandlungselements (F2) öffnen bis zum kontinuierlichem Strömen daraus, dann das Reinigungsventil (VP2) schließen;
- das Absperrventil (VI3) öffnen, das an den Eingang des zweiten Behandlungselements (F2) montiert ist;
- das Absperrventil (VI4) öffnen, das an den Ausgang des zweiten Behandlungselements (F2) montiert ist;
- das Absperrventil (VI2) schließen, das an den Ausgang des ersten Behandlungselements (F1) montiert ist;
- das Absperrventil (VI1) schließen, das an den Eingang des ersten Behandlungselements (F1) montiert ist; und
- das erste Gleichdruckventil (VE1) schließen.

## Claims

1. System for switching the flow of a fluid within a fluid circuit comprising two fluid treatment members (F1, F2), mounted in a parallel manner between a main fluid inlet (E) and a main fluid outlet (S), the switching system being for switching the flow to either treatment member (F1, F2), with isolating the treatment member (F1, F2) in which the fluid does not flow, so-called inactive treatment member, with respect to the other, so-called active, treatment member (F1, F2), **characterized by** the fact that the system comprises a two-way inlet isolation valve (VI1, VI3) mounted at the inlet of each treatment member (F1, F2), and two pressure-balanced branches (BE1, BE2) each having a fluid inlet fluidically communicating with the main fluid inlet (E), upstream said inlet isolation valves (VI1, VI3), and a fluid outlet (S1, S2) fluidically communicating with the inlet of a respective treatment member (F1, F2), the fluid outlet (S1, S2) of each pressure-balanced branch (BE1, BE2) being downstream the respective inlet isolation valve (VI1, VI3), a two-way pressure-balanced valve (VE1, VE2) being mounted on each pressure-balanced branch (BE1, BE2) so as to allow or inhibit the fluid flow along a path from the main fluid inlet (E) to the respective treatment member (F1, F2) by passing through the corresponding pressure-balanced branch (BE1, BE2).

2. System according to claim 1, **characterized by** the fact that it further comprises a two-way outlet isolation valve (VI2, VI4) at the outlet of each treatment member (F1, F2).

3. System according to one of claims 1 and 2, **characterized by** the fact that each treatment member (F1, F2) is equipped with a drain valve (VV1, VV2) mounted at the bottom thereof, so as to allow to drain the respective treatment member (F1, F2).

4. System according to one of claims 1 to 3, **characterized by** the fact that each treatment member (F1, F2) is further equipped with a bleed valve (VP1, VP2) mounted at the top thereof, so as to allow to bleed the respective treatment member.

5. System according to one of claims 1 to 4, **characterized by** the fact that it further comprises means for detecting the pressure in the treatment members (F1, F2).

6. System according to one of claims 1 to 5, **characterized by** the fact that it further comprises means for detecting a pressure differential between the main fluid inlet (E) and the main fluid outlet (S), the mpressure differential detecting means comprising, for instance, a differential pressure switch (P1) and a pressure gauge (M1) mounted in a parallel manner and connected to the main fluid inlet (E) and the main fluid outlet (S) by pressure tapping means (PP1, PP2), two isolation valves (VI5, VI6) being provided, one at the inlet and the other at the outlet of the parallel mounting of the differential pressure switch (P1) and the pressure gauge (M1).

7. System according to one of claims 1 to 6, **characterized by** the fact that the isolation valves (VI1, VI2, VI3, VI4, VI5, VI6), the pressure-balanced valves (VE1, VE2), and, if applicable, the bleed valves (VP1, VP2) and the drain valves (VV, VV2), are two-way ball valves.

8. System according to one of claims 1 to 7, **characterized by** the fact that the cross-sectional area of the pressure-balanced branches is equal to a value representing from 1 to 10% of that of the cross-sectional area of the main fluid inlet (E).

9. Fluid circuit comprising two fluid treatment members (F1, F2), mounted in a parallel manner between a main fluid inlet (E) and a main fluid outlet (S), and equipped with a system for switching the flow of the fluid to either treatment member, with isolating the treatment member in which the fluid does not flow, so-called inactive treatment member, with respect to the other, so-called active, treatment member, **characterized by** the fact that the switching system is as defined in one of claims 1 to 8.

10. Fluid circuit according to claim 9, **characterized by** the fact that the treatment members (F1, F2) are filters, the fluid circuit forming a fluid depollution/filtration system.

11. Fluid circuit according to one of claims 9 and 10, **characterized by** the fact that it comprises a body formed by a block in which have been drilled channels forming all or part of the circuit in which the fluid flows, the inlet isolation valves (VI1, VI3), and, if applicable, the outlet isolation valves (VI2, VI4), and the pressure-balanced valves (VE1, VE2) being mounted on said body.

12. Method for switching the flow of a fluid within a fluid circuit as defined in one of claims 9 and 10, equipped with a switching system as defined in claim 4 or one of claims 5 to 8 when depending on claim 4, to a second treatment member (F2) in which the fluid does not flow, so-called inactive treatment member, only the inlet (VII) and outlet (VI2) isolation valves for a first treatment member (F1), so-called active and in which the fluid flows, being opened, the pressure-balanced valve (VE1), so-called first pressure-balanced valve, mounted on the pressure-balanced branch (BE1) the outlet of which fluidically communicates with the inlet of the first treatment member (F1) being also opened, **characterized by** the fact that it comprises the steps consisting in, in the following order:
- opening the pressure-balanced valve (VE2) mounted on the pressure-balanced branch (BE2) the outlet (S2) of which fluidically communicates with the inlet of the second treatment member (F2), for filling the second treatment member (F2);
- opening the bleed valve (VP2) of the second treatment member (F2) until the fluid flows continuously therefrom, and then closing the bleed valve (VP2);
- opening the isolation valve (VI3) mounted at the inlet of the second treatment member (F2);
- opening the isolation valve (VI4) mounted at the outlet of the second treatment member (F2);
- closing the isolation valve (VI2) mounted at the outlet of the first treatment member (F1);
- closing the isolation valve (VII) mounted at the inlet of the first treatment member (F1); and
- closing the first pressure-balanced valve (VE1).
